# EUROPÄISCHE PATENTSCHRIFT

(11) **EP 1 733 976 B1**
(45) Veröffentlichungstag und Bekanntmachung des Hinweises auf die Patenterteilung: **09.11.2011**
(21) Anmeldenummer: 06115630.3
(22) Anmeldetag: 19.06.2006
(51) Int. Cl.: B65D 35/08, C08L 23/10, C08L 23/16

(54) **Kunststoffverpackung**
Plastic Packaging
Emballage en matière plastique

(30) Priorität: 17.06.2005 DE 102005028148
(43) Veröffentlichungstag der Anmeldung: 20.12.2006
(73) Patentinhaber: Fischbach KG Kunststoff-Technik, 51766 Engelskirchen (DE)
(72) Erfinder: Helmenstein, Achim, 51766 Engelskirchen (DE)
(74) Vertreter: von Kreisler Selting Werner

(56) Entgegenhaltungen:
- DE-A1- 10 207 701
- FR-A- 2 850 363
- US-A- 4 319 005
- US-A1- 2001 024 714
- US-A1- 2004 152 818

## Beschreibung

Die vorliegende Erfindung betrifft eine Polymermischung zur Herstellung einer flexiblen Verpackung aus Kunststoff und ein Verfahren zur Herstellung der flexiblen Verpackung aus Kunststoff.

Flexible Verpackungen, wie beispielsweise Tuben, werden eingesetzt um verschiedenste Produkte, beispielsweise aus den Bereichen Kosmetik, Nahrungsmittel, Klebstoffe, Dichtstoffe, usw., zu dosieren.

Typischerweise werden solche flexiblen Verpackungen zweistückig hergestellt. Hierzu wird ein extrudierter, plastisch verformbarer Kunststoffschlauch in die gewünschte Länge geschnitten und anschließend mit einem, in einem separaten Prozessschritt hergestellten Kopfstück verbunden. Grundsätzlich ist es wünschenswert, solche Produkte einstückig herzustellen, um den Produktionsaufwand möglichst gering zu halten.

Die WO 2005/019053 beschreibt ein Verfahren zur Herstellung einer solchen Verpackung, insbesondere einer Tube, das die Herstellung hochmaßhaltiger Tuben im Spritzgießprozess erlaubt.

Die EP 1 418 205 A1 (Sonoco Development Inc.) beschreibt bereits eine Zusammensetzung zur Herstellung entsprechender Tuben im Spritzguss. Hierzu werden Polypropylene eingesetzt, die sehr hohe Schmelzindizes "melt flow index" (MFI) oder "melt flow rates" (MFR) von mehr als 800 g/10 min aufweisen. Solche Materialien sind sehr leicht fließend und für den Spritzguss gut geeignet. Die daraus erhaltenen Tuben entsprechen jedoch in der Flexibilität, der Spannungsrissbeständigkeit und weiteren qualitativen Merkmalen nicht den Tuben, die im üblichen Verfahren zweistückig hergestellt werden.

US 6,124,008 (L'Oreal) beschreibt einen spritzgegossenen Kunststoffbehälter, wobei dieser eine Wand aufweist, die aus einer Polymermischung aus einem Ethylen/C₄ bis C₅-Olefin Copolymer und einem Ethylen/C₆ bis C₁₀-Olefin Copolymer besteht. Diese Verpackungen werden entweder aufgrund der geringen Fließfähigkeit der erhältlichen Werkstoffe sehr schwierig im Spritzgussverfahren herzustellen sein oder, wenn eine höhere Fließfähigkeit beim Werkstoff eingestellt werden kann, sind schlechtere Eigenschaften in der Spannungsrissbeständigkeit zu erwarten. Desweiteren sind Copolymere mit C₆ bis C₁₀ Olefinanteilen relativ teuer.

US 6,159,566 (L'Oreal) offenbart ein thermoplastisches Material und eine daraus hergestellte Tube. Dabei wird ein Polymergemisch eingesetzt, das aus einem ersten Polymer, einen Homopolymer von Propylen und einem zweiten Polymer, einem Propylenethylencopolymer besteht. Um die hohe Steifigkeit des Homopolymers von Polypropylen herabzusetzen und die Zähigkeit bzw. (Kälte)Schlagzähigkeit heraufzusetzen, sind erhebliche Mengenanteile eines speziellen Propylenethylencopolymers erforderlich, welches einen sehr niedrigen Biege-E-Modul aufweist und nur zu einem relativ hohen Preis verfügbar ist. FR 2,850,363 offenbart Polymermischungen zur herstellung einstückiger Tuben. US 2002/0039630 beschreibt einen Behälter, der eine Wand aus Polypropylen mit einem Biege-E-Modul von mindestens 1200 MPa und einem LD- oder VLD-Polyethylen enthält. Aufgrund des hohen Biege-E-Moduls des Polypropylens weist das Produkt für viele Anwendungen nicht die gewünschte Flexibilität auf.

DE 202 02 854 U1 beschäftigt sich mit im Extrusionsverfahren hergestellten Kunststofftuben, bei der der Kunststoff der ersten Schicht mindestens 50 Gew.% Methacrylsäurecopolymer aufweist.

DE 102 07 701 B4 offenbart eine im Extrusionsverfahren hergestellte Kunststofftube aus verformbarem, modifiziertem Polyethylen.

Diese im Extrusionsverfahren hergestellten ein- oder mehrschichtigen Kunststofftuben haben den Nachteil, dass unter einem hohen Produktionsaufwand Tubenhülse und Tubenschulter in zwei Produktionsschritten getrennt hergestellt und anschließend zusammengefügt werden müssen. Damit entstehen auch unterschiedliche Materialstrukturen und Eigenschaften für die Tubenschulter und die Tubenhülse.

Es besteht daher weiterhin ein Bedarf nach geeigneten Materialien, um flexible Kunststoffverpackungen herzustellen, insbesondere Materialien, die für eine Verwendung im Spritzguss geeignet sind sowie entsprechende Kunststoffverpackungen.

Aufgabe der Erfindung war es, mindestens einige der genannten Nachteile des Standes der Technik zu überwinden.

Gelöst wird die Aufgabe durch eine Polymermischung aus mindestens zwei Komponenten enthält, die ausgewählt werden aus:
a) über 2 Gew.-% eines Polypropylencopolymers mit einem Blege-E-Modul von höchstens 800 MPa und einer Melt Flow Rate Oberhalb von 25g/10min, aber höchstens 600 g/10 min (2,16 kg, 230°C),
c) mindestens 5 Gew.-% eines, Polyolefins ausgenommen ein Polypropylen,
wobei, wenn nur Komponente a) und Komponente c) vorhanden sind, die Komponente c) eine Melt Flow Rate von mindestens 15 g/10 min (2,16 kg, 230°C) aufweist, geeignet zur Herstellung einer flexiblen, durch Spritzgass erhältlichen Tube.

Bei umfangreichen Versuchen hat sich gezeigt, dass durch die erfindungsgemäße Kombination Materialien erhalten werden, aus denen sich insbesondere Tuben herstellen lassen, die von ihren Eigenschaften her weitestgehend den Eigenschaften üblicher, zweistückig hergestellter Verpackungen entweder entsprechen oder diese sogar übertreffen. Die erfindungsgemäßen Produkte zeichnen sich durch eine gute Herstellbarkeit im Spritzgussverfahren aus und sind wirtschaftlich vorteilhaft.

Bei den durchgeführten Versuchen hat man festgestellt, dass man über eine gezielte Änderung der Mengenverhältnisse der einzelnen Komponenten die Steifigkeit bzw. Verformbarkeit, die Spannungsrissbeständigkeit, die Fließfähigkeit, die Transparenz und die Wirtschaftlichkeit (hier Rohstoffkosten) innerhalb technisch sinnvoller Grenzen sehr gut an das gewünschte Verpackungsverhalten anpassen kann.

Polymer im Sinne dieser Anmeldung umfasst sowohl Homopolymere als auch Copolymere.

Copolymer im Sinne dieser Anmeldung sind Polymere, bei denen verschiedene Monomere gemeinsam, gleichzeitig oder nacheinander polymerisiert werden. Dies erfolgt typischerweise in Gegenwart von Katalysatoren und kann in einem oder in mehreren Reaktoren bzw. Reaktorenschritten erfolgen. Der Begriff Copolymer umfasst alle möglichen Copolymerisationsvarianten wie alternierende, Block-, Pfropf- und Random-Copolymere, sowie auch alle heterophasisch angelegten Copolymerisate. Er umfasst auch ataktische, syndiotaktische und isotaktische copolymere Kettenstrukturen. Die Copolymerisate können unvernetzt, wie auch vernetzt vorliegen. Der Begriff umfasst auch alle Polymere, die mehr als zwei Monomere enthalten, wie z.B. Terpolymere. Die Molekülstruktur kann amorph oder teilkristallin vorliegen.

Ein Copolymer enthält mindestes 50% der genannten Substanz, d.h. ein Polypropylencopolymer enthält mindestens 50 Gew.-% Propylenmonomere, ein Ethylencopolymer enthält mindestens 50 Gew.-% Ethylenmonomere, etc.

Als Komponente a) wird ein Polypropylencopolymer eingesetzt. Dies ist eine Verbindung, die als ein Monomer Propylen und bis zu 50 Gew.-% eines anderen Monomers, z.B. Ethylen, enthalten kann. Einsetzbar sind auch die Copolymerisate des Propylens mit anderen Monomeren, wie Buten (C₄), Hexen (C₆), Octen (C₈) oder auch längerkettigen Olefinen.

Ebenfalls denkbar sind z.B. vernetzte oder verzweigte Ethylen/Propylen (Dien)-Copolymere (EPDM) in kristalliner oder auch amorpher Struktur. Solche Materialien sind verfügbar z.B. von der Firma Hüls unter dem Handelsnamen Buna^{®}, von der Firma Monsanto unter dem Handelsnamen Santoprene^{®}, von der Firma Bayer unter dem Handelsnamen Levaflex^{®}, oder auch von der Firma Exxon Chemical unter dem Handelsnamen Vistalon^{®}.

Die erfindungsgemäßen Materialkomponenten weisen einen Biege-E-Modul auf, das nach ASTM D-709 bestimmt wird. Das erfindungsgemäße Material für Komponente a) weist bevorzugt einen Biege-E-Modul von höchstens 600 MPa, noch mehr bevorzugt von höchstens 200 MPa auf. Der Biege-E-Modul liegt bevorzugt bei mindestens 20 MPa, bevorzugt nicht unterhalb von 25 MPa. Entsprechende Materialien sind beispielsweise unter dem Namen Adflex^{®} von der Firma Basell erhältlich. Entsprechende Typen sind z.B. die Z108S oder X100G. Diese beispielhaft genannten Materialien sind heterophasische Copolymere. In einem ersten Reaktorschritt wird eine Matrix aus einem homopolymeren Polypropylen oder einem randomcopolymerisierten Polypropylen hergestellt. In einem weiteren Reaktorschritt wird ein Propylen/Ethylen Kautschuk hinzugefügt. Das Resultat ist ein heterophasischer Copolymerverbund aus Polypropylen und einem Propylen/Ethylen Kautschuk. Bei diesem Verfahren kann sowohl ein Ethylen/Propylen Kautschukanteil am Gesamtpolymer von bis zu 85 bis 90 Gew.% eingebracht werden, wobei auch der Ethylen-Anteil in diesem Ethylen/Propylen Kautschuk bis zu 50 Gew.-% betragen kann. Dementsprechend erreicht der Anteil des Ethylens am Polypropylen Gesamtcopolymer maximal 45 Gew.-%. Desweiteren zeichnet sich dieses Material für Komponente a) durch niedrige Werte im Biege-E-Modul aus. Das Material hat eine gute Spannungsrissbeständigkeit, es ist allerdings relativ teuer. Die Fließeigenschaften führen zu einer nicht optimalen Verarbeitbarkeit, insbesondere im Spritzguss.

Die Melt Flow Rate von Komponente a) liegt oberhalb von 25 g/10 min (2,16kg, 230°C).

Der Anteil eines Comonomers in Komponente a) beträgt vorzugsweise mehr als 20 Gew.-%.

Bevorzugte Polypropylencopolymere der Komponente a) sind Polypropylenethylencopolymere mit einem Ethylenanteil von 20 bis 45, bevorzugt 30 bis 40 Gew.-%.

Bei Komponente a) liegt der Anteil über 2 Gew.-%, mehr bevorzugt über 5 Gew.-% der Polymermischung.

Als optionale Komponente b) wird ein Polypropylen eingesetzt. Dieses kann ein Homopolymer oder ein Copolymer sein, das wie oben definiert ist. Ebenso kann es sich um ein Metallocen-Polypropylen handeln (m-PP). Hier wird bei der Polymerisation ein Metallocen Katalysator verwendet. Bevorzugt ist Komponente b) ein Copolymer von Propylen mit einem anderen Olefin, insbesondere Ethylen.

Die Komponente b) unterscheidet sich von der Komponente a) Bevorzugt weist die Komponente b) eine höhere Fließfähigkeit als Komponente a) auf. Außerdem kann Komponente b) in der Comonomerzusammensetzung anders aufgebaut sein als Komponente a). Bevorzugt sind Polypropylencopolymere für Komponente b), welche einen geringeren Anteil am Comonomeren, z.B. Ethylen, als Komponente a) beinhalten. Als Comonomer kommen aber auch hier z.B. auch andere Olefine wie Buten (C₄), Hexen (C₆), Octen (C₈) oder längerkettige Olefine in Betracht. Komponente b) weist im Regelfall einen höheren Biege-E-Modul als Komponente a) auf, zumindest weicht der Blege-E-Modul von Komponente b) um mindestens 20% vom Biege-E-Modul von Komponente a) ab. Dieses Biege-E-Modul von Komponente b) beträgt in einer Ausführungsform mehr als 800 MPa. In einer Ausführungsform liegt der Biege-E-Modul der Komponente b) bei höchstens 1600 MPa, bevorzugt bei höchstens 1100 MPa, noch mehr bevorzugt bei höchstens 600 MPa.

Die Melt Flow Rate liegt bevorzugt zwischen 30 und 180 g/10 min (2,16 kg, 230°C), mehr bevorzugt zwischen 30 und 150 g/10 min (2,16 kg, 230°C).

Bevorzugte Polymere für die Komponente b) weisen einen Comonomeranteil, z.B. Ethylen von maximal 30, bevorzugt 3 bis 15 Gew.-% auf. Geeignete Komponenten für die Komponente b) sind kommerziell erhältlich, beispielsweise unter den Handelsnamen Moplen^{®} und Novolen^{®} von der Firma Basell, Stamylan P^{®} oder Vestolen P^{®} von der Firma DSM/Sabic, Exxon Mobil PP^{®} von der Firma Exxon Mobil. Die entsprechenden Komponenten bewirken eine Steigerung der Spannungsrissbeständigkeit im Material. Die bevorzugt eingesetzten Komponenten weisen darüber hinaus eine gute Verarbeitbarkeit und Fließfähigkeit auf. Der Biege-E-Modul wird durch das Material im Allgemeinen erhöht. Der Rohstoffpreis liegt in einem mittleren bis niedrigen Bereich.

Wenn Komponente b) vorhanden ist, liegt der Gehalt bevorzugt bei mindestens 2 Gew.-%, mehr bevorzugt mindestens 5 Gew.-% der Polymermischung.

Als Komponente c) wird ein Polyolefin eingesetzt, das sowohl einen homopolymeren als auch einen copolymeren Aufbau haben kann. Bei diesem Polyolefin handelt es sich nicht um ein Polypropylen (PP). Es kann sich jedoch z.B. um Polefine, wie Polybuten-1 (PB-1), um Polyisobutylen (PIB), um Poly-4-methylpenten-1 (PMP) oder Polyethylen (PE) handeln.

Polybutene-1 oder Polyisobutene bringen in vielen Fällen eine Verbesserung für die Spannungsrissbeständigkeit und aufgrund eines günstigen Fliessverhaltens auch eine Verbesserung in der Verarbeitbarkeit und können auch in geringen Zusätzen (weniger als 25%) verwendet werden. Auch bei diesen Produkten sind sowohl Homo- als auch Copolymerisate denkbar. Bei diesen Produkten sind die Rohstoffkosten im mittleren bis oberen Bereich anzusetzen.

Polybutene bzw. Polyisobutene werden z.B. unter den Handelsnamen Polybutene-1 PB 0800M oder Polybutene-1 PB 0300 M von der Firma Basell oder Parapol^{®} von der Firma Exxon Chemie bzw. Vistanex^{®} von der Firma Esso Chemie vertrieben.

Ebenfalls kann Komponente c) ein Polyethylen sein, das ein Homopolymer oder auch ein Copolymer sein kann. Dieses Copolymer unterscheidet sich - soweit vorhanden - von der Komponente a) und der Komponente b). Eingesetzt werden können Polyethylene verschiedenster Polymerisationsarten. Geeignete Polyethylene sind unter anderem Low Density Polyethylen (LD-PE) bis High Density Polyethylen (HD-PE), Linear Low Density Polyethylen (LLD-PE), Very Low Density Polyethylen (VLD-PE), Ultra Low Density Polyethylen (ULD-PE), Metallocen Polyethylen (m-(LLD)-PE), Ethylenvinylacetat Copolymere (EVA). Ebenfalls sind auch Copolymerisate von Ethylen mit Buten (C₄), Hexen (C₆), Octen (C₈) oder auch längerkettigen Olefinen geeignet. Desweiteren sind Ethylen/Ethylacrylat-Copolymere (E/EA), Ethyl/Methylacrylat-Copolymere (E/MA), vernetztes Polyethylen (PE-V) oder chloriertes Polyethylen (PE-C) geeignet. Geeignete Materialien sind kommerziell erhältlich, beispielsweise unter dem Handelsnamen Dowlex^{®} von der Firma Dow Chemical, unter dem Handelsnamen Lupolen^{®} von der Firma Basell, unter den Handelsnamen Innovex^{®}, Rigidex^{®} und Novex^{®} von der Firma BP, unter den Handelsnamen Stamylex^{®}, Stamylan PE^{®} von der Firma DSM/Sabic, unter Exxon Mobil PE^{®} von der Firma Exxon Mobil, unter dem Handelsnamen Lutene^{®} von LG Chemical sowie unter den Handelsnamen Riblene^{®}, Flexirene^{®}, Clearflex^{®}, Eraclene^{®} und Greenflex^{®} von der Firma Polimeri Europa.

Zwar weisen entsprechende Polyethylene oftmals schlechtere Spannungsrissbeständigkeiten auf, sie erlauben jedoch ein Einstellen des Biege-E-Modul, der Verarbeitbarkeit und der Fließfähigkeit. Darüber hinaus sind viele Polyethylene relativ günstig erhältlich und wirken sich somit positiv auf den Gesamtrohstoffpreis des Polymers aus.

Ebenfalls geeignet sind z.B. vernetzte Ethylen/Propylen (Dien)-Copolymere (EPDM) in kristalliner oder auch amorpher Struktur. Solche Materialien sind verfügbar z.B. von der Firma Hüls unter dem Handelsnamen Buna^{®}, von der Firma Monsanto unter dem Handelsnamen Santoprene^{®}, von der Firma Bayer unter dem Handelsnamen Levaflex^{®}, oder auch von der Firma Exxon Chemical unter dem Handelsnamen Vistalon^{®}.

Eine Definition der Polyolefine in der Abgrenzung untereinander und zu anderen synthetischen Kunststoffen findet man in dem Fachbuch des VDI Verlages "Die Kunststoffe und ihre Eigenschaften" von Hans Domininghaus, 4. Auflage, Kapitel 2.1.1 bis 2.1.1.8.1 auf Seiten 73 bis 171.

Bei Komponente c) beträgt der Anteil mindestens 5 Gew.-%, mehr bevorzugt mindestens 10 Gew.-% der Polymermischung.

Als weitere Komponente kann eine Komponente d) enthalten sein; ein Methacrylsäurecopolymer oder ein Acrylsäurecopolymer. Dieses Material weist eine sehr hohe Transparenz, verbunden mit einer guten Spannungsrissbeständigkeit, auf. Ebenfalls zeichnet sich dieses Material bei vielen verfügbaren Typen durch niedrige Werte des Biege-E-Moduls aus. Die Fließeigenschaften führen im Regelfall zu einer nicht optimalen Verarbeitbarkeit, insbesondere im Spritzguss. Vertrieben wird dieses Material unter anderem von der Firma DuPont unter den Handelsnamen Surlyn^{®} und Nucrel^{®}. Das ionenvernetze Surlyn hat eine noch bessere Spannungsrissbeständigkeit gegenüber chemisch aggressiven Inhaltsstoffen in der Verpackung.

Bevorzugterweise handelt es sich bei Komponente d) um ein Copolymer von Ethylen zu einem Ethylen/Acrylsäure-Copolymer (E/AA), Ethylen/Ethylacrylat-Copolymer (E/EA), Ethylen/Methacrylat-Copolymer (E/MA) oder Ethylen/Methacrylsäure-Copolymer (E/MAA). Komponente d) ist von Komponente c) verschieden, soweit beide enthalten sind.

Wenn Komponente d) enthalten ist, beträgt der Gehalt vorzugsweise mindestens 5 Gew.-%, mehr bevorzugt mindestens 10 Gew.-% der Polymermischung.

In einer Ausführungsform der Erfindung enthält die Polymermischung zwei Komponenten, also die Kombination a) + c).

In einer anderen Ausführungsform enthält die Polymermischung drei Komponenten also z.B. a) + b) + c), oder a) + c) + d)

In einer weiteren Ausführungsform sind alle Komponenten a), b), c) und d) enthalten.

Die Polymermischung kann grundsätzlich weitere Polymere enthalten. Bevorzugt weist die Zusammensetzung jedoch keine Polymerkomponente auf, die nicht unter die Definition der Komponenten a), b), c) und d) fallen; bevorzugt sind nur a), b) und c) enthalten.

In einer anderen Ausführungsform sind die drei Komponenten a), b) und c) enthalten. Bevorzugten Mischungen sind dann
1) 5 bis 50 Gew-% des Komponente a),
2) 5 bis 40 Gew-% der Komponente b),
3) 10 bis 60 Gew-% der Komponente c)

Mit Hilfe der Mengenanpassung einer jeden einzelnen Rohstoffkomponente wird gezielt das Eigenschaftsprofil des Materialgemisches der herzustellenden Kunststoffverpackung gesteuert, um hinsichtlich der gewünschten Eigenschaften in Steifigkeit bzw. Verformbarkeit (dargestellt durch den Biege-E-Modul), der Spannungsrissbeständigkeit, der Fließfähigkeit, der Transparenz und der Wirtschaftlichkeit (durch geringere Rohstoffkosten) das optimale Ergebnis zu erzielen.

Durch Zugabe von Komponente a) wird gezielt der Biege-E-Modul gesenkt und die Spannungsrissbeständigkeit erhöht.

Durch Zugabe von Komponente b) wird gezielt die Fließfähigkeit, die Spannungsrissbeständigkeit und oftmals auch die Wirtschaftlichkeit (durch geringere Rohstoffkosten) des Materialgemisches erhöht.

Durch Zugabe von Komponente c) wird gezielt die Fließfähigkeit, die Wirtschaftlichkeit (durch geringere Rohstoffkosten) erhöht und oftmals auch der Biege-E-Modul gezielt gesenkt. Eine Ausnahme bildet hierfür Komponente c) das Polybuten-1 oder auch das Polyisobutylen. Von diesen Rohstoffen sind am Markt Produkte verfügbar mit höheren Fließfähigkeiten (MFI) und gleichzeitig sehr guter Spannungsrissbeständigkeit, so dass mit Zugabe von diesen Rohstoffen auch durch Komponente c) die Spannungsrissbeständigkeit weiter erhöht werden kann.

Durch Zugabe von Komponente d) wird gezielt die Transparenz und die Spannungsrissbeständigkeit erhöht und oftmals auch das Biege-E-Modul gezielt gesenkt.

Ziel ist es, eine Verpackung zu erhalten, welche für das abgefüllte Produkt eine ausreichende Spannungsrissbeständigkeit hat. Die für die erfindungsgemäße Verpackung notwendige Spannungsrissbeständigkeit variiert je nach Aggressivität des abgefüllten Produktes.

Für die meisten Anwendungsfälle ist eine eingefärbte Verpackung gewünscht, jedoch besteht in Bereichen der kosmetischen Industrie auch ein vermehrter Wunsch nach transparenten Verpackungen.

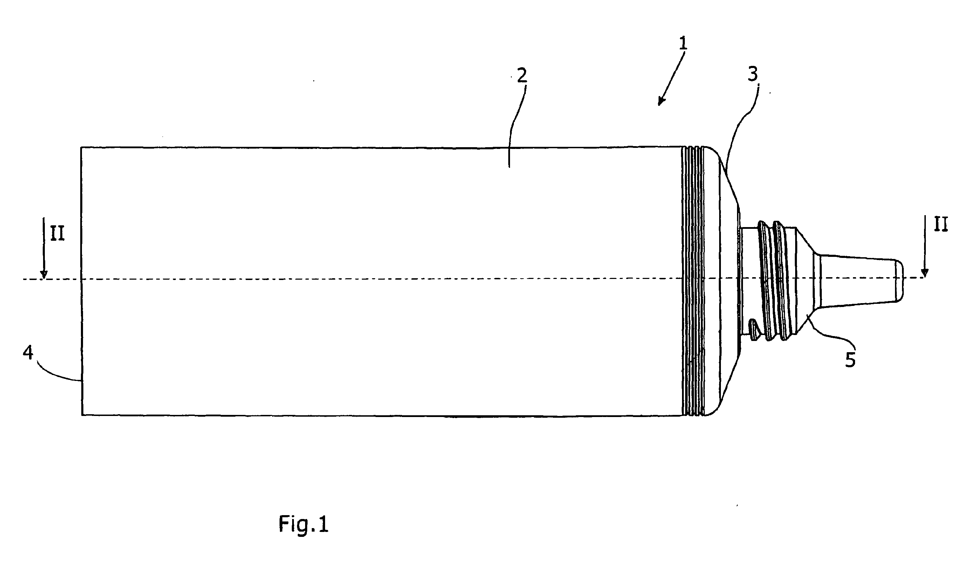

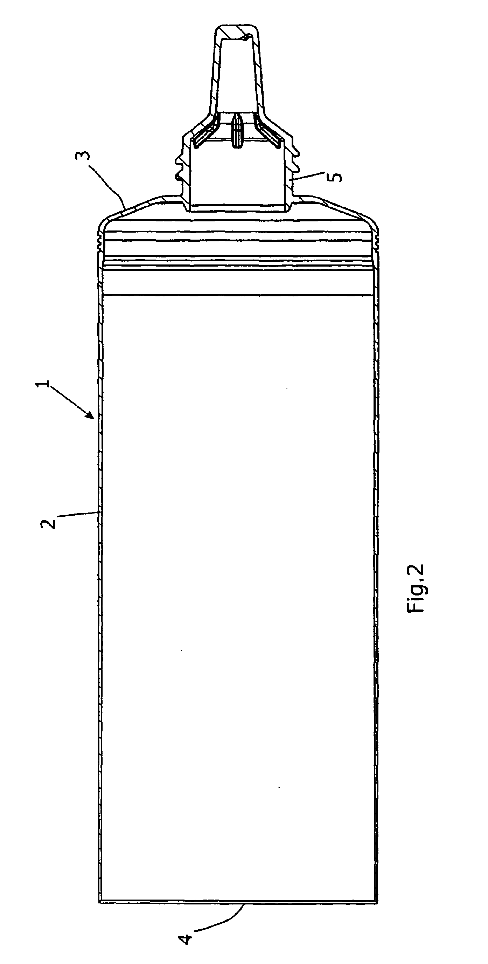

Figuren 1 und 2 zeigen Ansichten geeigneter Verpackungen.

Allen erfindungsgemäßen Verpackungen ist gemeinsam, dass die Polymermischung für die erfindungsgemäße Verpackung vorzugsweise eine MFI von mindestens 3 g/10 min (230°C, 2,16 kg) besitzt, mehr bevorzugt mindestens von 30 g/10 min (230°C, 2,16 kg) aufweist. Die Bestimmung des MFI erfolgt nach ASTM D 1238. Ebenfalls haben alle erfindungsgemäßen Verpackungen gemeinsam, dass vorzugsweise ein Biege-E-Modul der Polymermischung der erfindungsgemäßen Verpackung von höchstens 1.600 MPa vorliegt. Bei Verpackungen, bei denen eine Rückverformung gewünscht ist, um hierdurch das Produkt beispielsweise zu dosieren, liegt der Biege-E-Modul bevorzugt zwischen 1.000 und 1.200 MPa. Bei Verpackungen, die bleibend verformt werden sollen, liegen bevorzugte Biege-E-Module bei 200 bis 300 MPa.

Als weiteres gemeinsames Ziel der erfindungsgemäßen Verpackungen ist die günstigere Kostenstruktur bei der Herstellung der Verpackung im Vergleich zur qualitativen ähnlichen marktüblichen Verpackungen nach dem Stand der Technik.

Bevorzugt ist die Verpackung einstückig und/oder einschichtig.

Einstückig bedeutet, dass die Verpackung keine zwei Teile aufweist, die miteinander dauerhaft verbunden werden, sondern der Verpackungskörper wird nur einstückig mit einer Verpackungsschulter hergestellt. Bei einer Tube (1) wird nicht ein Tubenkopf (3) mit einem Tubenkörper (2) verbunden. Selbstverständlich wird bei einer Tube (1) separat ein Tubenverschluss hergestellt. Dieser ist jedoch nicht dauerhaft mit der einstückigen Tube verbunden. Bei dem Tubenrohling (1) schließt sich vorne am Tubenkörper (2) die Tubenschulter (3) an. An der Tubenschulter (3) kann sich ein Tubenkopf (5) anschließen, welcher zur Befestigung einer Kappe dienen kann. Am rückwärtigen Ende des Tubenrohlings (1) befindet sich eine Einfüll- und Versiegelungsöffnung (4).

Die Wanddicke der Verpackung beträgt bevorzugt 0,35 mm bis 1,0 mm.

Einschichtig bedeutet, dass die Verpackung ihre strukturelle Integrität nur durch eine Schicht erreicht. Selbstverständlich kann auch eine einschichtige Tube, abgesehen von der einen Polymerschicht, weitere Schichten von Farben oder Aufklebern zur Dekoration der Tube aufweisen. Auch ist die Aufbringung einer speziellen Dekorations- oder Barriereschicht In Etikettenform vor, während oder nach dem Herstellungsprozess möglich. Bevorzugt ist die eine Schicht im Spritzguss hergestellt.

Die flexible Verpackung ist eine Tube, die durch Spritzguss hergestellt wird. Insbesondere ist das Verfahren zur Herstellung von längeren Tuben im Spritzguss geeignet, die eine Länge von 100 mm oder mehr, bevorzugt 125 mm oder mehr aufweisen. Typischerweise liegt die Länge nicht oberhalb von 250 mm. Typische Durchmesser liegen zwischen 25 und 50 mm, bevorzugt 30 bis 50 mm.

Die erfindungsgemäß hergestellten flexiblen Tuben können z.B. ein kosmetisches Produkt, ein Nahrungsmittel, ein Haushaltsprodukt, einen Klebstoff, einen Dichtstoff, eine Industriechemikalie oder ähnliche Inhaltsstoffe enthalten.

Gegenstand der Erfindung ist weiterhin ein Verfahren zur Herstellung einer flexiblen Tube aus Kunststoff umfassend den Schritt des Spritzgießens einer Polymermischung aus mindestens zwei Komponenten, die ausgewählt werden aus:
a) über 2 Gew.- % eines Polypropylencopolymers mit einem Biege-E-Modul von höchstens 800 MPa und einer Melt Flow Rate oberhalb von 25g/10min, aber höchstens 600 g/10 min (2,16 kg, 230°C)
c) mindestens 5 Gew.-% eines Polyolefins ausgenommen ein Polypropylen,
wobei, wenn nur Komponente a) und Komponente c) vorhanden sind, die Komponente c) eine Melt Flow Rate von mindestens 15 g/10 min (2,16 kg, 230°C) aufweist.

Es besteht die Möglichkeit, andere Polymere vor oder während der Verarbeitung der Komponenten a) bis d) zuzumischen.

### Testverfahren

Der Biege-E-Modul wird gemäß ASTM D-790 (bei 23°C) bestimmt. Die Melt-Flow-Rate (MFR) bzw. der Melt Flow Index (MFI) wird nach ASTM D-1238 bestimmt. Je nach Schmelztemperaturbereich des einzelnen Rohmaterials wird das Verfahren bei unterschiedlichen Temperaturen durchgeführt. Im Regelfall gilt für die Komponenten a) und b), dass die Messung bei einer Prüfbelastung von 2,16 kg und wegen der höheren Kristallid-Schmelztemperatur bei 230°C durchgeführt wird. Bei den Komponente c) und d) wird die Prüfung bei einer Prüfbelastung von 2,16 kg und bei 190°C durchgeführt. Die Prüfbedingungen sind immer angegeben.

### Beispiele

Die Versuche wurden mit einem Versuchswerkzeug auf einer Spritzgießmaschine durchgeführt. Die angegebenen Rohmaterialmengen wurden gemeinsam in Granulatform in einen Behälter gegeben und per Hand vermischt. Ebenso ist es auch möglich, die einzelnen Materialkomponenten direkt auf der Maschine prozentual maschinell zuzugeben und zu mischen. Nach der Zuführung der Rohmaterialkomponenten werden diese von der Spritzgussmaschine in den Plastifizierzylinder gefördert, dort unter Temperatur- und Schereinwirkung plastifiziert und homogenisiert und anschließend in das Spritzgießwerkzeug eingespritzt.

Innerhalb des Spitzgießwerkzeuges kühlt das vorab noch plastische Polymergemisch auf ein festes und entformbares Temperaturniveau ab und die Verpackung wird dann aus dem Spritzgusswerkzeug entformt. Anschließend kann

### Beispiel 1

| Komponenten | a) | b) | c) | d) |
|---|---|---|---|---|
| Rohstofftyp | PP-Copolymer | - | LLD-PE | - |
| Herstellerbezeichnung | Adflex Z108S | - | Flexirene LLD-PE MS20 | - |
| Gew.-% | 40% | - | 60% | - |
| Ergebnis | gutes Verarbeitunosverhalten mit hoher Tubenflexibilität gegeben | | | |

### Beispiel 2 (nicht erfindungsgemäß)

| Komponente | a) | b) | c) | d) |
|---|---|---|---|---|
| Rohstofftyp | - | Metallocene PP-Homopolymer | ULLD-PE | E/MAA |
| Herstellerbezeichnung | - | Metocene HM648T | Clearflex MPDO | Surlyn 8660 |
| Gew.-% | - | 30% | 40% | 30% |
| Ergebnis | hohe Transparenz und Spannungsrissbeständigkeit | | | |

| | | | | |
|---|---|---|---|---|
| E/MAA = Ethylenmethacrylsäure Copolymer. | | | | |

### Beispiel 3

| Komponente | a) | b) | c) | d) |
|---|---|---|---|---|
| Rohstofftyp | PP-Copolymer | PP-Copolymer | LLD-PE | - |
| Herstellerbezeichnung | Adflex X100G | Moplen EP 240T | Flexirene LLD-PE MS20 | - |
| Gew.-% | 40% | 20% | 40% | |
| Ergebnis | gute Spannungsrissbeständigkeit und Tubenelastizität | | | |

### Beisplel 4 (nicht erfindungsgemäß)

| Komponente | a) | b) | c) | d) |
|---|---|---|---|---|
| Rohstofftyp | PP-Copolymer | PP-Copolymer | - | - |
| Herstellerbezeichnung | Adflex Z108S | Moplen RP 248R | - | - |
| Gew.-% | 70% | 30% | - | - |
| Erlebnis | sehr gute Spannunpsrissbeständigkelt und Tubenflexibilität | | | |

### Beispiel 5

| | | | | |
|---|---|---|---|---|
| Komponente | a) | b) | c) | d) |
| Rohstofftyp | - | Metallocene PP-Homopolymer | ULLD-PE | - |
| Herstellerbezeichnung | - | Metocene HM648T | Clearflex MPDO | - |
| Gew.-% | - | 30% | 70% | - |
| Ergebnis | gute Transparenz und Spannungsrissbeständigkeit | | | |

### Beispiel 6

| Komponente | a) | b) | c) | d) |
|---|---|---|---|---|
| Rohstofftyp | PP-Copolymer | PP-Copolymer | ULLD-PE | - |
| Herstellerbezeichnung | Adflex Z108S | Moplen EP240T | Clearflex MPDO | - |
| Gew.-% | 33% | 33% | 34% | - |
| Ergebnis | gute Spannungsrissbeständigkeit und Tubenflexibilität | | | |

### Beispiel 7

| Komponente | a) | b) | c) | d) |
|---|---|---|---|---|
| Rohstofftyp | PP-Copolymer | Metallocene PP-Homopolymer | LD-PE | E/MAA |
| Herstellerbezeichnung | Adflex X100G | Metocene HM648T | Stamylan LD1922T | Surlyn 9970 |
| Gew.-% | 20% | 30% | 30% | 20% |
| Ergebnis | gute Transparenz und Tubenflexibilität | | | |

### Beispiel 8

| Komponente | a) | b) | c) | d) |
|---|---|---|---|---|
| Rohstofftyp | - | PP-Copolymer | LLD-PE | E/MAA |
| Herstellerbezeichnung | - | Moplen EP240T | Flexirene LLD-PE MS20 | Surlyn 8660 |
| Gew.-% | - | 20% | 40% | 40% |
| Ergebnis | gute Transparenz und Tubenflexibilität | | | |

### Beispiel 5 (nicht erfindungsgemäß)

| Komponente | a) | b) | c) | d) |
|---|---|---|---|---|
| Rohstofftyp | - | Metallocene PP-Homopolymer | ULLD-PE | - |
| Herstellerbezeichnung | - | Metocene HM648T | ClearFlex MPDO | - |
| Gew.-% | - | 30% | 70% | - |
| Ergebnis | gute Transparenz und Spannungsrissbeständigkeit | | | |

### Beispiel 6

| Komponente | a) | b) | c) | d) |
|---|---|---|---|---|
| Rohstofftyp | PP-Copolymer | PP-Copolymer | ULLD-PE | - |
| Herstellerbezeichnung | Adflex Z108S | Moplen EP240T | Clearflex MPDO | - |
| Gew.-% | 33% | 33% | 34% | - |
| Ergebnis | gute Spannungsrissbeständigkeit und Tubenflexibilität | | | |

### Beispiel 7

| Komponente | a) | b) | c) | d) |
|---|---|---|---|---|
| Rohstofftyp | PP-Copolymer | Metallocene PP-Homopolymer | LD-PE | E/MAA |
| Herstellerbezeichnung | Adflex X100G | Metocene HM648T | Stamylan LD1922T | Surlyn 9970 |
| Gew.-% | 20% | 30% | 30% | 20% |
| Ergebnis | gute Transparenz und Tubenflexibilität | | | |

### Beispiel 8 (nicht erfindungsgemäß)

| Komponente | a) | b) | c) | d) |
|---|---|---|---|---|
| Rohstofftyp | - | PP-Copolymer | LLD-PE | E/MAA |
| Herstellerbezeichnung | - | Moplen EP240T | Flexirene LLD-PE MS20 | Surlyn 8660 |
| Gew.-% | - | 20% | 40% | 40% |
| Ergebnis | gute Transparenz und Tubenflexibilität | | | |

### Vergleichsbeispiel 3

| Komponente | a) | - | - | - |
|---|---|---|---|---|
| Rohstofftyp | PP-Copolymer | PP-Homopolymer | | |
| Herstellerbezeichnung | Adflex X100G | Hostalen PPW2080 | | |
| Gew.-% | 80% | 20% | | |
| Ergebnis | hinreichend Spannungsrissbeständigkeit und Tubenflexibilität, jedoch starkes Kleben der Tube im Spritzgießwerkzeug, deshalb Produktionsschwierigkeiten | | | |

### Vergleichsbeispiel 4

| Komponente | c) | c) | - | - |
|---|---|---|---|---|
| Rohstofftyp | LD-PE | HD-PE | | - |
| Herstellerbezeichnung | Stamylan LD1938T | Rigidex 5226EA | | - |
| Gew.-% | 75% | 25% | | - |
| Ergebnis | gute Tubenflexibilität und Herstellbarkeit, jedoch unbrauchbare Spannungsrissbeständigkeit | | | |

## Patentansprüche

1. Polymermischung aus mindestens zwei Komponenten, nämlich:
a) über 2 Gew.-% eines Polypropylencopolymers mit einem Biege-E-Modul von höchstens 800 MPa und einer Melt Flow Rate oberhalb von 25 g/10 min, aber höchstens von 600 g/10 min (2,16 kg, 230°C),
c) mindestens 5 Gew.-% eines Polyolefins, ausgenommen ein Polypropylen,
wobei, wenn nur Komponente a) und Komponente c) vorhanden sind, die Komponente c) eine Melt Flow Rate von mindestens 15 g/10 min (2,16 kg, 230°C), aufweist,
geeignet zur Herstellung einer flexiblen, durch Spritzguss erhältlichen Tube.

2. Polymermischung nach Anspruch 1, **dadurch gekennzeichnet, dass** die Polymermischung einen MFI von mindestens 3 g/10 min (2,16 kg, 230°C) aufweist und ein Biege-E-Modul von höchstens 1.600 MPa aufweist.

3. Polymermischung nach Anspruch 1 oder 2, **dadurch gekennzeichnet, dass** Komponente a) einen Biege-E-Modul von höchstens 600 MPa, bevorzugt höchstens 200 MPa aufweist und/oder ein Biege-E-Modul von mindestens 20 MPa aufweist.

4. Polymermischung nach Anspruch 1, **dadurch gekennzeichnet**, das zusätzlich b) ein Polypropylen, das von der Komponente a) verschieden ist, mit einer Melt Flow Rate von 20 bis 600 g/10 min (2,16 kg, 230°C) enthalten ist.

5. Polymermischung nach mindestens einem der Ansprüche 1 bis 4, **dadurch gekennzeichnet, dass** zusätzlich ein Methacrylsäurecopolymer oder Acrylsäurepolymer enthalten ist.

6. Polymermischung nach mindestens einem der Ansprüche 1 bis 5, **dadurch gekennzeichnet, dass** Komponente a) ein Polypropylencopolymer mit Ethylen ist, insbesondere dass die Komponente b) einen Ethylenanteil von bis zu 30 Gew.-% aufweist. Ethylen ist, insbesondere dass die Komponente b) einen Ethylenanteil von bis zu 30 Gew.-% aufweist.

7. Polymermischung nach einem der Ansprüche 4 bis 6, **dadurch gekennzeichnet, dass** die Komponente b) einen Biege-E-Modul von höchstens 1600 MPa aufweist.

8. Polymermischung nach einem der Ansprüche 1 bis 7, **dadurch gekennzeichnet, dass** Komponente c) ein Homopolymer oder ein Copolymer von Polyethylen ist.

9. Polymermischung nach einem der Ansprüche 1 bis 8, **dadurch gekennzeichnet, dass** Komponente c) ausgewählt wird aus der Gruppe bestehend aus Polybuten-1 (PB-1), Polyisobutylen (PIB), Poly-4-methylpenten-1 (PMP) und vernetztem oder chloriertem Polyethylen (PE-V oder PE-C).

10. Polymermischung nach einem der Ansprüche 1 bis 9, **dadurch gekennzeichnet, dass** Komponente c) einen MFI (190°C, 2,16 kg) von mindestens 2 g / 10 min und einen Biege-E-Modul von höchstens 1.200 MPa hat.

11. Polymertnischung gemäß mindestens einem der Ansprüche 4 bis 10, **dadurch gekennzeichnet, dass** die Polymermischung folgende Zusammensetzung aufweist:
a) 5 bis 50 Gew-% der Komponente a),
b) 5 bis 40 Gew-% der Komponente b),
c) 10 bis 60 Gew-% der Komponente c).

12. Verwendung der Polymermischung nach einem der Ansprüche 1 bis 11 zur Herstellung einer Tube durch Spritzguss.

13. Verfahren zur Herstellung einer flexiblen Tube aus Kunststoff umfassend den Schritt des Spritzgießens einer Polymermischung aus mindestens zwei Komponenten, nämlich:
a) über 2 Gew.-% eines Polypropylencopolymers mit einem Biege-E-Modul von höchstens 800 MPa und einer Melt Flow Rate oberhalb von 25 g/10 min, aber höchstens von 600 g/10 min (2,16 kg, 230°C), c) mindestens 5 Gew.-% eines Polyolefins, ausgenommen ein Polypropylen
wobei, wenn nur Komponente a) und Komponente c) vorhanden sind, die Komponente c) eine Melt Flow Rate von mindestens 15 g/10 min (2,16 kg, 230°C) aufweist.

14. Verfahren nach Anspruch 13, **dadurch gekennzeichnet, dass** zusätzlich
b) ein Polypropylen, das von der Komponente a) verschieden Ist, mit einer Melt Flow Rate von 20 bis 600 g/10 min (2,16 kg, 230°C)
enthalten ist.

## Claims

1. A polymer mixture of at least two components, namely:
a) more than 2% by weight of a polypropylene copolymer having a flexural modulus of elasticity of at most 800 MPa and a melt flow rate of above 25 g/10 min, but at most 600 g/10 min (2.16 kg, 230°C);
c) at least 5% by weight of a polyolefin other than a polypropylene;
wherein, if only component a) and component c) are present, component c) has a melt flow rate of at least 15 g/10 min (2.16 kg, 230 °C);
suitable for preparing a flexible collapsible tube obtainable by injection molding.

2. The polymer mixture according to claim 1, **characterized in that** said polymer mixture has an MFI of at least 3 g/10 min (2.16 kg, 230 °C) and a flexural modulus of elasticity of at most 1,600 MPa.

3. The polymer mixture according to claim 1 or 2, **characterized in that** component a) has a flexural modulus of elasticity of at most 600 MPa, more preferably at most 200 MPa, and/or a flexural modulus of elasticity of at least 20 MPa.

4. The polymer mixture according to claim 1, **characterized in that** b) a polypropylene different from component a) and having a melt flow rate of from 20 to 600 g/10 min (2.16 kg, 230 °C) is additionally contained.

5. The polymer mixture according to at least one of claims 1 to 4, **characterized in that** a methacrylic acid copolymer or acrylic acid polymer is additionally contained.

6. The polymer mixture according to at least one of claims 1 to 5, **characterized in that** component a) is a polypropylene copolymer with ethylene, especially that component b) has an ethylene proportion of up to 30% by weight.

7. The polymer mixture according to any of claims 4 to 6, **characterized in that** component b) has a flexural modulus of elasticity of at most 1600 MPa.

8. The polymer mixture according to any of claims 1 to 7, **characterized in that** component c) is a homopolymer or copolymer of polyethylene.

9. The polymer mixture according to any of claims 1 to 8, **characterized in that** component c) is selected from the group consisting of polybutene-1 (PB-1), polyisobutylene (PIB), poly-4-methylpentene-1 (PMP), and cross-linked or chlorinated polyethylene (PE-V or PE-C).

10. The polymer mixture according to any of claims 1 to 9, **characterized in that** component c) has an MFI (190 °C, 2.16 kg) of at least 2 g/10 min and a flexural modulus of elasticity of at most 1,200 MPa.

11. The polymer mixture according to at least one of claims 4 to 10, **characterized in that** said polymer mixture has the following composition:
a) from 5 to 50% by weight of component a);
b) from 5 to 40% by weight of component b);
c) from 10 to 60% by weight of component c).

12. Use of the polymer mixture according to any of claims 1 to 11 for preparing a collapsible tube by injection molding.

13. A process for preparing a flexible collapsible tube of plastic, comprising the step of injection molding a polymer mixture of at least two components, namely:
a) more than 2% by weight of a polypropylene copolymer having a flexural modulus of elasticity of at most 800 MPa and a melt flow rate of above 25 g/10 min, but at most 600 g/10 min (2.16 kg, 230 °C);
c) at least 5% by weight of a polyolefin other than a polypropylene;
wherein, if only component a) and component c) are present, component c) has a melt flow rate of at least 15 g/10 min (2.16 kg, 230 °C).

14. The process according to claim 13, **characterized in that**
b) a polypropylene different from component a) and having a melt flow rate of from 20 to 600 g/10 min (2.16 kg, 230 °C) is additionally contained.

## Revendications

1. Mélange de polymères constitué de deux composants au moins, à savoir :
a) plus de 2% en poids d'un copolymère de polypropylène ayant un module d'élasticité et de flexion de 800 MPa au plus et un indice de fluidité supérieur à 25 g/10 min, mais de 600 g/10 min au plus (2,16 kg, 230°C),
c) au moins 5% en poids d'une polyoléfine, excepté un polypropylène,
mélange dans lequel, lorsque seuls le composant a) et le composant c) sont présents, le composant c) présente un indice de fluidité de 15 g/10 min au moins (2,16 kg, 230°C),
approprié à la fabrication d'un tube flexible pouvant être obtenu par moulage par injection.

2. Mélange de polymères selon la revendication 1, **caractérisé en ce que** le mélange de polymères présente un MFI de 3 g/10 min au moins (2,16 kg, 230°C) et un module d'élasticité et de flexion de 1600 MPa au plus.

3. Mélange de polymères selon la revendication 1 ou 2, **caractérisé en ce que** le composant a) présente un module d'élasticité et de flexion de 600 MPa au plus, de préférence 200 MPa au plus, et/ou un module d'élasticité et de flexion de 20 MPa au moins.

4. Mélange de polymères selon la revendication 1, **caractérisé en ce qu'**il contient en plus
b) un polypropylène qui est différent du composant a) avec un indice de fluidité de 20 à 600 g/10 min (2,16 kg, 230°C).

5. Mélange de polymères selon au moins une des revendications 1 à 4, **caractérisé en ce qu'**il contient en plus un copolymère d'acide méthacrylique ou un polymère d'acide acrylique.

6. Mélange de polymères selon au moins une des revendications 1 à 5, **caractérisé en ce que** le composant
a) est un copolymère de polypropylène avec de l'éthylène, en particulier **en ce que** le composant b) présente un pourcentage d'éthylène pouvant atteindre 30% en poids.

7. Mélange de polymères selon l'une des revendications 4 à 6, **caractérisé en ce que** le composant b) présente un module d'élasticité et de flexion de 1600 MPa au plus.

8. Mélange de polymères selon l'une des revendications 1 à 7, **caractérisé en ce que** le composant c) est un homopolymère ou un copolymère de polyéthylène.

9. Mélange de polymères selon l'une des revendications 1 à 8, **caractérisé en ce que** le composant c) est choisi dans le groupe constitué de polybutène-1 (PB-1), de polyisobutylène (PIB), de poly-4-méthylpentène-1 (PMP) et de polyéthylène réticulé ou chloré (PE-R ou PE-C).

10. Mélange de polymères selon l'une des revendications 1 à 9, **caractérisé en ce que** le composant c) a un MFI (190°C, 2,16 kg) de 2 g/10 min au moins et un module d'élasticité et de flexion de 1200 MPa au plus.

11. Mélange de polymères selon au moins une des revendications 4 à 10, **caractérisé en ce que** le mélange de polymères présente la composition suivants :
a) 5 à 50% en poids du composant a),
b) 5 à 40% en poids du composant b),
c) 10 à 60% en poids du composant c).

12. Utilisation du mélange de polymères selon l'une des revendications 1 à 11 pour la fabrication d'un tube par moulage par injection.

13. Procédé de fabrication d'un tube flexible en matière plastique, ledit procédé comportant l'étape de moulage par injection d'un mélange de polymères constitué d'au moins deux composants, à savoir :
a) plus de 2% en poids d'un copolymère de polypropylène ayant un module d'élasticité et de flexion de 800 MPa au plus et un indice de fluidité supérieur à 25 g/10 min, mais de 600 g/10 min au plus (2,16 kg, 230°C),
c) au moins 5% en poids d'une polyoléfine, excepté un polypropylène,
mélange dans lequel, lorsque seuls le composant a) et le composant c) sont présents, le composant c) présente un indice de fluidité de 15 g/10 min au moins (2,16 kg, 230°C).

14. Procédé selon la revendication 13, **caractérisé en ce qu'**il contient en plus
b) un polypropylène qui est différent du composant a) avec un indice de fluidité de 20 à 600 g/10 min (2,16 kg, 230°C).
